Europäisches Patentamt

European Patent Office

Office européen des brevets

(11) Publication number: 0 389 400
A2

# EUROPEAN PATENT APPLICATION

(21) Application number: 90500006.3

(22) Date of filing: 19.01.90

(51) Int. Cl.5: B29C 63/04, B29C 67/22

The title of the invention has been amended (Guidelines for Examination in the EPO, A-III, 7.3).

(30) Priority: 20.01.89 ES 8900541
07.07.89 ES 8902752

(43) Date of publication of application:
26.09.90 Bulletin 90/39

(84) Designated Contracting States:
AT BE DE FR GB IT

(71) Applicant: Menendez Ochoa, José Miguel
Crtra. de Granollers a Caldes, Km 8,8
E-08420 Canovelles(ES)

(72) Inventor: Menendez Ochoa, José Miguel
Crtra. de Granollers a Caldes, Km 8,8
E-08420 Canovelles(ES)

(74) Representative: Morgades y Manonelles, Juan
Antonio
Valencia, 300 - entresuelo 1a
E-08009 Barcelona(ES)

(54) Process for post-forming coverings.

(57) For direct execution starting with a nucleus (10) with covering (11) of whatever type of width and depth, by means of a group of operations combined according to a procedur in continuum or not, which is initiated by cutting the nucleus (10) and covering (11), vertical milling of the edge (10b) adhesion of a profile (14) by means of adhesion of the covering (11) to the outside surface of the edge (14a). The collocation of a profile joined to the edge (20b), covered on one or both sides by a covering material (21), is carried out by means of the injection through a pistol (24) joined to the postforming machine, in such a way that the speed of injection of the said profile (28) is at all times the same as the speed of the feeding of the nucleus (20), the transversal section of the profile (28) when the injected material has expanded, coinciding with the transversal section of the pistol (24).

FIG.1

## PROCESS OF PERFECTED POSTFORMING

The request, here presented, for a Patent of Invention, consits of a "PROCESS FOR PERFECTIONING THE POSTFORMING", the new characteristics of operation and sequence of mechanical operations of which achieve the objective for what has been specifically conceived with safety and maximum efficiency.

The operation of postforming exists in the market which it is specificallyabout, namely the covering of a nucleus of wood conglomerate or like, the edges of which are preferably curved. Under the traditional system the execution of the postforming, involved cutting the nucleus of the said conglomerates to measurements specified by the customer, afterwards in parallel or not, followed by the cutting of the covering of the nucleus and in continuation the milling of the edges of the nucleus with shaving off the shavings, and in the following operation, applying the covering on top of the nucleus to produce the positioning of the said nucleus by means of an operation of fixing with a supply of heat and pressure so as to, by means of further pressure on the free edge of the covering; adhere it to the curved edge of the nucleus previously produced the milling cutters.

This group of operations, which constitutes what could be called the state of the technique in the area of postforming, presents serious inconveniences when the postforming has to be effected with a wide range of measurements and thicknesses of the nucleus, which oblige a preparation and setting all the machinery which intervene in the cited operations for cutting the nucleus, cutting the covering, milling the edges of the nucleus, positioning it, with glue and supply of heat and afterwards postforming, to make it adequate to the standards specific to the nucleus to be postform in this way to the curvature of the edge, which in these cases obliges the substitution of the milling cutters, to adapt the milling cutters to the type of curvature to be produced on the edge of the nucleus, signifying what can be considered in a normal day's work and and extremely high cost in the process of manufacturing sandwichtype panels (a nucleus covered on both sides) and postformed edges, leading to a large amount of dead time taken up with all types of adjustements.

The major inconvenience which the traditional system presents in postforming is having to start off with the nucleus without the covering, since the milling operation on the nucleus when it is covered on one side, bi it the top or even both, irs extremely complex and demands the use of milling cutters which by their very position doing the work suffer a great energy loss, with the result that the procedure for milling with the necleus covered on one or both sides is neither operative nor possible; the line of milling necessary would not accept it and would always produce a jagged edge.

The object of the presented Patent of Invention is a total change in the operationes which make up the procedure for postforming, which we could say is the classic procedure prevailing int the market.

The said change, totally new, and of our own invention has as its objetive, proceeding to the postforming directly from a covered nucleus, either on one or both sides, which avoids the inconveniences previously printed out. That is to say the alineation and setting of all the production line to allow the cutting of the nucleus, the cutting of the covering, the milling of the nucleus, the positioning, the fixing by heat and the postforming must not be varied and the need as a result of going back and lining up all the machinery which intervene in the operaitons previously cited, for distinct thicknesses and widths of the nucleus and coverings to be treated, permitting a job to be done in series or parallel with continuity and without interruption.

The procedure starts with a covered nucleus, also called sandwich, this nucleus being covered on one or both sides which, to continue, is sectioned into multiple layers at previously programmed distances followed by a straight mi lling of the edge of the nucleus and of one of the coverings, leaving the other projecting out completely without treatment, so as to later insert a curved profile the height of which coincides completely with the thickness of the nucleus and finally the by means of the appliance of glue, heat and pressure to cover the curved profile with the portion of the upper covering projecting out. The perfecting of the previous process, consists basically in the way of positioning the profile colaterally to the straight edge of the nucleus, additions to the said profile as is described capable of being substituted by the injection into the said profile by means of a tube fixed on the machine used at times of molding through which a thermoplastic material is injected through one its ends formed by a resin of one or more components, in a continuous form and with a speed of production of the profile equal to the feeding of the covered nucleus, the came steps being followed as in the original Patent previously described.

This procedure is equally valid for any type of profile whatever the curvature, given that the profile which is adhered to the straight edge will be fabricated separately, designed following the decorative needs of the fixing and anchoring, etc...

Other details and characteristics of the presented request for Patent of Invention will manifest themselves during the passing of the description to be given, in which reference will be made to drawings enclosed//which in an schematic way represent the necessary details. These details are given an example, making reference to one possible case for practical achievement but botbeing limited solely to the details given in the example illustrated; for this reason the description can be considered from an illustrative point of view and without limitations of any type.

Figure n.1 is a representation of the different stages to which a nucleus is subjected until the postforming is attained according to the procedure known as the present state of the technique, including in the first stage of cutting the nucleus (10), a second of cutting (11), a third stage of milling the edge of the nucleus (10) with the milling cutter (12), a fourth stage of positioning and covering of the nucleus (10) with fixing by means of heat and pressure and finally the postforming of the edge (10a) with the section projecting out (11), all this representing the traditional method of fabrication of the postforming.

Figure n.2 represents the group of operations carried out, starting with a nucleus (10) fabricated in sandwich by means of cutting the nucleus (10) covering with a stratified layer (11), milling one of the edges (10b), inserting a profile (14) and after the postforming, all this according to new procedure.

Figure n.3 in the representation on the left is a nucleus (10) with its covering (11) but without the postforming having been effected, which represents a form of edge (10a) which is very difficult to obtain with an industrial milling cutter, since the life span of the milling cutter would be extremely short. Then in the section of (10a) nearest to (11) would have to be obtain by means of a profile of the milling cutter (12) of a section practically irrelevant and lacking resistance, no cutting material woyld hold the line; while the representation on the right is one of the ways in which it would be possible to effect the operation of milling by means of the production of first a reduction of the angle (10c) and then the curving (10d).

Figure n.4 is a postforming piece which would be the result of having carried out on it all the operations of the new visualised procedure.

Figure n.5 like figure n.4 is another realisation following the visualised procedure.

Figure n.6 like n.4 is another realisation following the visualised procedure.

Figure n.7 like figure n.4 is another realisation following the visualised procedure.

Figure n.8 like figure n.4 is another realisation following the visualised procedure.

Figure n.9 like figure n.4 is another realisation following the visualised procedure.

Figure n.10 like figure n.4 is another realisation following the visualised procedure.

Figure n.11 like figure n.4 is another realisation following the visualised procedure.

Figure n.12 like figure n.4 is another realisation following the visualised procedure with a concrete application of a covering.

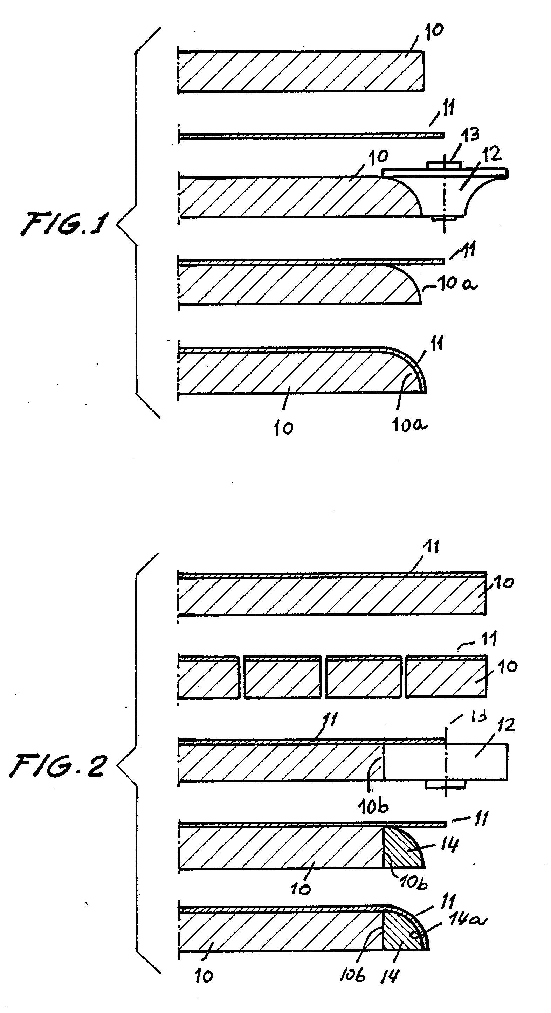

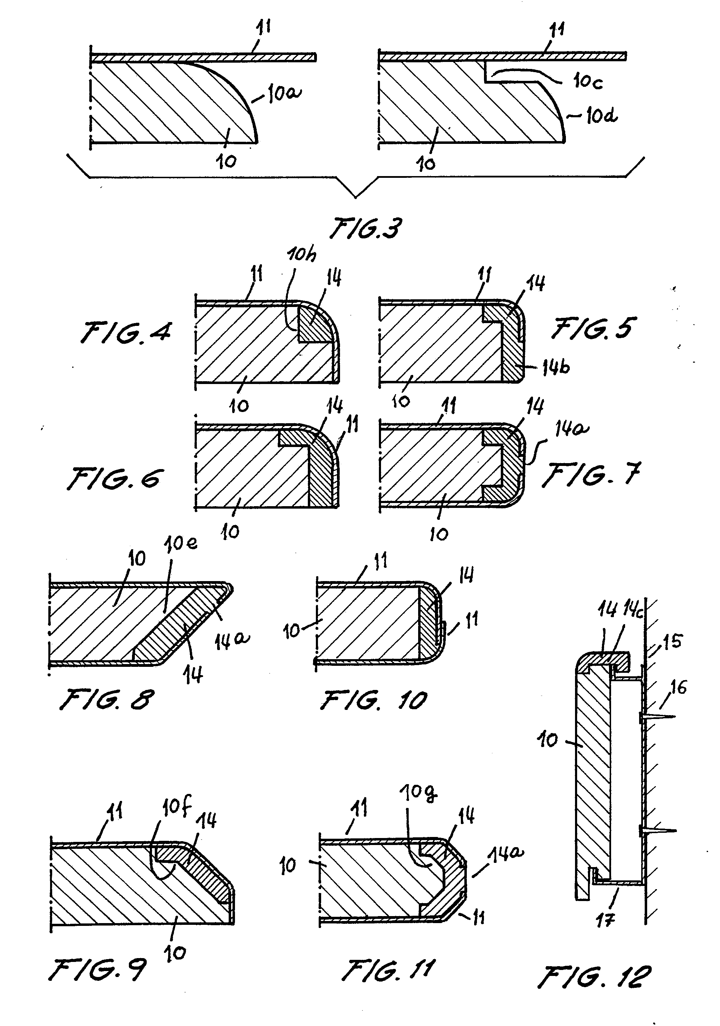

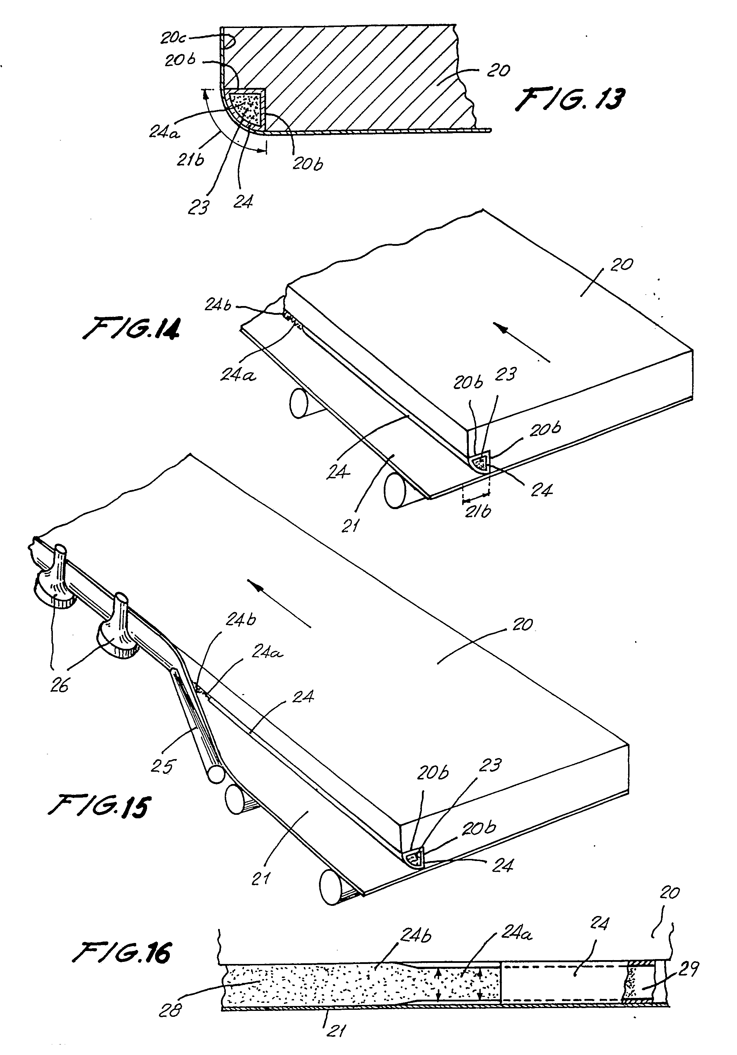

Figure n.13 is a partial transversal section of a nucleus (20) with its covreing (21) with one the edges (20b) already cut at a right angle at the moment when injector, not represented in the figure, administers the resin (23) from inside the tube (24) jointly to the postforming machine.

Figure n.14 is a partial transversal section of a nucleus (20) with its covering (21) moments after by means of a tube (24), resin has been injected adopting the form of a profile (27) and projection out (21) of the potsforming,

Figure n.15 is a prespective of a partial transversal section of a nucleus (20) with its covreing (21), advancing along a postforming line according to the visualised improvements.

Figure n.16 is a conventional view of the exit of the resin (23) from the pistol (24).

The procedure which is the object of the presentedrequest for Patent of Invention is initiated with the programmed cutting of a panel or nucleus (10), covered on one or both sides, by means of a covering or stratified layer (11) which can be of a multitude of materials such as wood, plastic, metal and preferably paper impregnated in various quantities formig or stratified layer on the same board, and following with a milling, whichreduces the nucleus (10) and one of the covering (11) when the nucleus (10) is covered on both sides following a vertical line (10b) by means of the rotation of a conventional milling reducing the edge of the nucleus (10) until it generates another edge parallel tothe first one (10b).

As can be seen in figure n.2 the milling does not reduce the covering (11) on the upper face of the nucleus (10) but it can reduce it in the case that the nucleus has two covreings (11), one higher and one lower, the lower in this case not being represented in the figure.

Afterwards. and following the automized procedure, profile (14) is applied to the face (10b) of the nucleus. The said profile can be wood, metal and extruded materials such as plastic, aluminium or combinations of whichever, and finally the folding of the covering (11) is carried out projecting out on top of the face (14a) of the profile (14) by means of the application of glue, pressure and heat, the operation of postforming being conpleted in this way.

With clear explanations in figure n.3 two ways of reducing the edge of the nucleus (10) have been represented, in the drawing shown on the left-hand side of figure n.3 and has been explained before, the production and preparation of a circular edge (10a) is not feasible, since the milling cutters employed must be of a narrow line and finish at zero. To all this should be added the axis tolerance of dissipation of heat and resulting from whatever operation, would break and cause energy lost to the milling cutter however sophisticated the materials and for this reason following the procedure what is the objective of the Patent of Invention with the aforementioned milling cutter narrow-edge and finishing at zero, no type of benefit would be achieved in terms of workmanship or savings in materials or hiegher productivity through producing a small irregular edge. Nevertheless the drawing shown on the right-hand side of figure n.3 can be carried out, in with a reduction of angle is produced (10c) of small depth with a milling cutter of a straight edge so as to afterwards effect a curvilinear reduction (10d) of the edge of the nucleus (10) by means of a cascaded milling.

In spite of the way of executing what would result in the drawing shown on the right-hand on introducing the reduction (10c) of low-depth, a profile (4) would introduce factors of lack of adjustment through which the edge (4d) of the profile not represented in figure n.3 could create a point of discontinuity or a small exit from the line (10d), edge of nucleus (10) making it impossible to effect the postformed as the edge is not completely smooth.

Putting the object of the presented Patent of Invention into practice permits multiple advantages not only those enumerated in the first par of the document but also that it is necessary to add the decorativeeffects of fixation and anchoring and of a practical type which will be described later. If the profile used in the new procedure is of the form which is represented in figure n.5 permis that the covreing (11), if in this way the partial covreing of the outside, edge of the profile is desired (14), leaving one part of this profile (14) open to receiving decorative effects thanks to the drawings engroved and colours which can consist of the part (14b) seen in the said profile (14).

The said decorative refinements reached by means of the object of the presented request for a Patent of Invention can also be achieved thanks to a profile of the types represented in figure n.7 in which equally the section of the edge (14a) no covered with profile (14) could contain equally elements or means of decorations previously mentioned.

Figures n.8, 9 and 10 are other possible realisations obtained according to the envilaged procedure, representing itself in figure n.10 as another realisation in which the covreings of both sides of the nucleus (10) are superimposed on each other on top of the profile (14).

Profiles (14) which are geometric configurations which can vary permits, as is indicated in figure n.12, that their inside dege (14c) serves for the fitting of elements (17) adhered to a vertical hanging (15), making possible in this way that the convered nucleus the procedure of postforming of which has been effected folowing the Patent can enjoy a bigger advantage in the sense that the said covered nucleus serve as an element of decoration as can be plated the walls, or even as protection as for example as conventional skirting boards can also be.

After observing the drawings and the explanatione which we have effected with them the request for a Patent of Invention can be understood, motivating the present document to a simple and effective construction which can be carried out in pratice with great case, constituting, without any doubt, a new industrial outcome.

Lateral milling with the addition of a profile permits postforming of a distinct form obtaining superior production, since the production of the sandwich is carried out with large sizes and high production quantities, being a very elastic system in terms of measurements and forms, always starting off with a nucleus covered on one or both sides which can be recuperated from whatever desperfection, reducing the width of the covered nucleus, an operation not possible under the traditional postformed method.

Those operations can be done in different phases or by means of installations on an automatic line. This eliminates the need to suply stratified layers, decorative laminas or films of the thickness or support necessary to manipulate them in the traditional system, so that the system becomes very profitable for its low cost permiting radius of curvature lower than in the traditional as the covering can be of greater thickness.

In one the preferred realisations of what is the object of request aditional to the Patent of Invention n.P.8900541 and as cab be seen in figures n. 13, 14 and 15, the postforming process which is concerned with collocating a pro file onto the edge (20b) is done by means of the injection through a pistol (24) of a thermoplastic material formed by a resin of one or two components, in such a way that the speed of production or injection of the said profile (28) will be at all times equal to the speed of the provision of the nucleus (20) with its edge (20b) previously milled, following on with the postforming operation in which by means of the supply of heat and pressure an corresponding glue, the total adherence of the covernig (21) over the expanded profile (28) and of the nucleus (20) in its part covering (20c) is achieved. The transversal section of the profile (28) when the thermoplastic material has expanded coincides with the transversal section of the pistol (24), also coinciding with the time of expansion of the resin (23) with the formation of a regular development of the position (21b) of the covreing (21), on distancing the postformed board from the pistol (24).

It will be understood after observing the drwings and explanetion which e have effected about them that the request for a Patent of Invention which motivates the present petition shows a simple and effective porcedure which can be be put into practice with great case, constituting, without any doubt, a newindustrial breakthrough, substituting the addition of a rigid profile for the formation of an edge for a false injected profile (28) which first has a section (24a) coinciding with the interior transversal and after coincides with the section (24b) on expansion of the resin (23).

In a similar way the formation of the expanded profile (28) could be effected by injecting directly into the gap area (9) delimited by position (21b) of the covering (21) and the edge (20b) of the nucleus (20) without needing the assistance of the pistol (24b), aiding itself for the folding of the covering (21) of the nozzle (25) and rollers (26) totally conventional, helping to reach a perfect development of portion (21b) by the expansive force of the re sin (23) only. The artificial edge or pierced profile (24) will remain joined to the postformed machine.

It should be made clear that in this objective which this present request for a Patent of Invention constitutes that all the variations and modifications of detail which circumstancs and practice could require can be introduced, as long as with the variations introduced the essential facts which are resumed in the following claims are not altered or modified.

## Claims

1 - "PROCESS OF PERFECTED POSTFORMING", of a nucles of conglomerate or similar coverings on one or both sides, characterised in that it is produced continiously starting with a nucleus fabricated in sandwich covered on both sides, or one of them without distintion, afterwards sectioned not only the covering (11) but also the nucleus (10), to continue with straight milling of the edges by means of a milling cutter (12) revolving around axis (13), producing a vertical edge (10b), adhering automatically to the edge (10b), a profile (14) the outside edge of which follows approximately a curvilinear line, and finally the outside edge is covered by means or mechanics of pressure, heat and supply of adhering material, with the projection of the covering (11).

2 - "PROCESS OF PERFECTED POSTFORMING", characterised acording to the first claim, in which the cut of the nucleus (10) covered on one or both sides without distinction is effceted with the same or different widths and depths of cutting.

3 - "PROCESS OF PERFECTED POSTFORMING", in which the milling operation can produce an edge for the application of the profile (14) as well the vertical edge (10b), or even a trailing edge as in edge (10e).

4 - "PROCESS OF PERFECTED POSTFORMING", in which the edge produced in the nucleus (10) by the milling cutter (12) on revolving on its axis (13), can adopt whatever form or irregular line as in edges (10f) and (10g).

5 - "PROCESS OF PERFECTED POSTFORMING", in which the profile (14) can be covered on its outside edge partially or totally leaving larger or smaller width of the same (14a) open.

6 - "PROCESS OF PERFECTED POSTFORMING", in which the inside border (14c) of profile (14), can be a means of help to items of fastening (17) attached to vertical faces (15).

7 - "PROCESS OF PERFECTED POSTFORMING", in characterised in that the formation of an expansive profile (28) results from the injection through the inside of a pistol (24) joined to a postforming machine, of a resin (23) which once expanded coincides with the said profile (28).

8 - "PROCESS OF PERFECTED POSTFORMING" characterised according to the previous claim in which the transversal section (24b) of the pistol (24), coincides with the transversal section of the expanded profile (28).

FIG.1

FIG.2

FIG.3

FIG.4

FIG.5

FIG.6

FIG.7

FIG. 8

FIG. 10

FIG.9

FIG. 11

FIG. 12

*FIG.13*

*FIG.14*

*FIG.15*

*FIG.16*